**Europäisches Patentamt**

**European Patent Office**

**Office européen des brevets**

(11) Veröffentlichungsnummer : **0 166 927**
**B1**

(12)  EUROPÄISCHE PATENTSCHRIFT

(45) Veröffentlichungstag der Patentschrift :
23.03.88

(51) Int. Cl.⁴ : **B 60 T 15/42**

(21) Anmeldenummer : **85105884.2**

(22) Anmeldetag : **13.05.85**

(54) Schnellbremsbeschleuniger für indirekt wirkende Druckluftbremsen.

(30) Priorität : **26.06.84 DE 3423507**

(43) Veröffentlichungstag der Anmeldung :
**08.01.86 Patentblatt 86/02**

(45) Bekanntmachung des Hinweises auf die Patenterteilung : **23.03.88 Patentblatt 88/12**

(84) Benannte Vertragsstaaten :
**AT CH DE FR GB IT LI**

(56) Entgegenhaltungen :
**EP-A- 0 017 260**
**EP-A- 0 022 899**
**EP-A- 0 050 278**
**FR-A- 2 411 740**
**FR-A- 2 441 523**
**US-A- 4 145 090**

(73) Patentinhaber : **KNORR-BREMSE AG**
**Moosacher Strasse 80 Postfach 401060**
**D-8000 München 40 (DE)**

(72) Erfinder : **Huber, Johann**
**Ohlmüllerstrasse 14**
**D-8000 München 90 (DE)**

**Beschreibung**

Die Erfindung betrifft einen Schnellbremsbeschleuniger für indirekt wirkende Druckluftbremsen von Schienenfahrzeugen, mit einem Steuerkolben zur Steuerung eines in eine Entlüftung der Hauptluftleitung eingeschalteten Beschleunigungsventils, wobei der Steuerkolben einerseits, in Schließrichtung des Beschleunigungsventils wirkend, ungedrosselt vom Druck in der Hauptluftleitung und andererseits von einem Steuerdruck in einer Steuerkammer beaufschlagt ist, die an die Hauptluftleitung oder an einen von der Hauptluftleitung gespeisten Vorratsbehälter angeschlossen ist, und mit einem in eine Entlüftung der Steuerkammer eingeschalteten Auslaßventil, das in Schließrichtung von einem vom Hauptluftleitungsdruck beaufschlagten Ventilkolben gesteuert ist.

Ein derartiger Schnellbremsbeschleuniger ist aus der EP-A-0 050 278 bekannt. Der Hauptluftleitungsdruck beaufschlagt hierbei den andererseits von einer Feder belasteten Ventilkolben in Schließrichtung des Auslaßventils wirkend. Das Auslaßventil stellt eine schnelle Wiederbereitschaft des Schnellbremsbeschleunigers nach dessen Ansprechen dann sicher, wenn der Hauptluftleitungsdruck auf wenigstens annähernd Atmosphärendruck abgesenkt ist. Hieraus ergibt sich, daß die Hauptluftleitung nach Ansprechen des Schnellbremsbeschleunigers zum alsbaldigen Wiederlösen der Bremsen schnell wieder unter Druck gesetzt werden kann, wobei allerdings der Hauptluftleitungsdruck aus etwa Atmosphärendruck wieder auf die Regeldruckhöhe angehoben werden muß. Dies kann einerseits zu einem über die Länge eines Zuges ungleichmäßigen Bremsenlösen führen, andererseits wird hierdurch ein beachtlicher Druckluftverbrauch verursacht und das Bremsenlösen zeitlich verzögert.

Aus der DE-PS 29 29 649 ist ein Entlüftungsventil für einen Schnellbremsbeschleuniger bekannt, welches in die Verbindung des Auslaßkanals des Schnellbremsbeschleunigers zur Atmosphäre einzuordnen ist. Dieses Entlüftungsventil hat die Aufgabe, unabhängig vom Volumen der Hauptluftleitung beim Ansprechen des Schnellbremsbeschleunigers eine Druckabsenkung in der Hauptluftleitung bis auf einen bestimmten, festgelegten Wert zuzulassen und somit einen in seiner Höhe relativ genau festlegbaren Restdruck in der Hauptluftleitung zu erhalten, wodurch ein rasches Wiederlösen der Bremsen unter Einsparung von Druckluftenergie ermöglicht wird. Das Entlüftungsventil muß jedoch von der zu entlüftenden Hauptluftleitungsluft durchsetzt werden, es muß entsprechend dieser großen Druckluftmenge einen großen Durchströmungsquerschnitt aufweisen und stellt trotzdem einen Widerstand für die aus der Hauptluftleitung durch den Schnellbremsbeschleuniger abzulassende Druckluft dar.

Der Erfindung liegt die Aufgabe zugrunde, einen Schnellbremsbeschleuniger der eingangs genannten Art, also ohne die Druckluftabströmung aus der Hauptluftleitung behindernder Zusatzeinrichtung, in einfacher Weise derart auszubilden, daß er wie der Schnellbremsbeschleuniger mit nachgeordnetem Entlüftungsventil bei seinem Ansprechen, unabhängig vom Volumen der Hauptluftleitung, stets eine rasche Druckabsenkung in der Hauptluftleitung bis auf einen bestimmten, festgelegten Restdruck bewirkt und welcher somit durch Erhalten eines bestimmten, in seiner Höhe relativ genau festlegbaren Restdruckes in der Hauptluftleitung ein Einsparen von Druckluftenergie und ein rasches Wiederlösen der Bremsen ermöglicht.

Diese Aufgabe wird nach der Erfindung dadurch gelöst, daß bei geöffnetem Beschleunigungs- und Auslaßventil der Hauptluftleitungsdruck einen geringeren Druckabsenkungsgradienten als der Steuerdruck aufweist, daß der Ventilkolben zumindest bei geschlossenem Auslaßventil zwei unterschiedlich große Beaufschlagungsflächen aufweist, deren größere vom Hauptluftleitungsdruck und deren kleinere hierzu entgegenwirkend vom Steuerdruck beaufschlagt ist, und daß eine nach Öffnen des Auslaßventils wirksame Offenhaltungsvorrichtung vorgesehen ist, welche das Auslaßventil zumindest annähernd bis zum Eintritt gleicher Druckhöhen in der Hauptluftleitung und der Steuerkammer offenhält und erst nachfolgend ein Wiederschließen des Auslaßventils bewirkt.

Die nach der weiteren Erfindung zweckmäßige Ausgestaltung eines derartig ausgebildeten Schnellbremsbeschleunigers ist in den Unteransprüchen angegeben.

In der Zeichnung sind Ausführungsbeispiele für nach der Erfindung ausgebildete Schnellbremsbeschleuniger schematisch dargestellt, und zwar zeigt

Figur 1 ein Schnittbild durch ein erstes Ausführungsbeispiel,

Figur 1A eine Einzelheit hieraus in vergrößertem Maßstab, und

Figur 2 eine Einzelheit eines zweiten Ausführungsbeispiels.

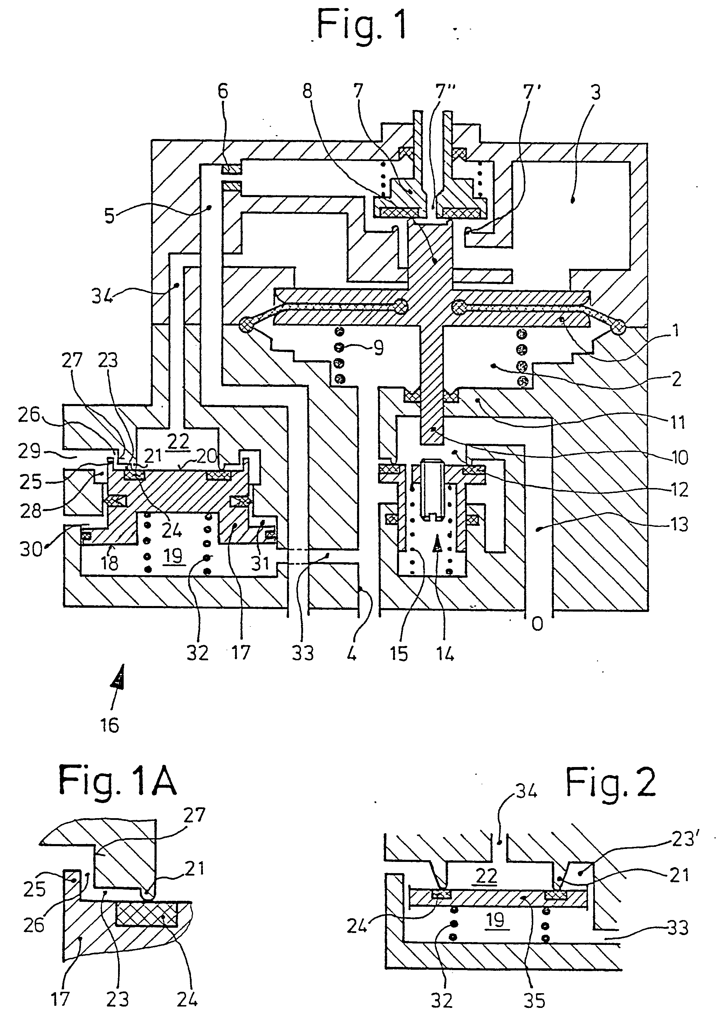

Gemäß Fig.1 unterteilt ein als Membrankolben ausgebildeter Steuerkolben 1 eine Gehäusekammer des Schnellbremsbeschleunigers in einen ersten Raum 2 und einen zweiten, weiterhin als Steuerkammer 3 bezeichneten Raum. Der Raum 2 ist ungedrosselt über einen Gehäusekanal 4 an eine im weiteren nicht dargestellte Hauptluftleitung angeschlossen. Ein nicht gezeigter Vorratsbehälter ist über einen weiteren Gehäusekanal 5 und eine in diesen eingeschaltete Drossel 6 sowie ein nachgeschaltetes Ein- und Auslaßventil 7 an die Steuerkammer 3 angeschlossen. In der in der Zeichnung dargestellten einen Stellung des Steuerkolbens 1 ist der Einlaß 7' des Ein- und Auslaßventils 7 geöffnet, so daß der an den nicht dargestellten Vorratsbehälter angeschlossene Gehäusekanal 5 über die Drossel 6 und den Einlaß 7' des Ein- und Auslaßventils 7 an die Steuerkammer 3 angeschlossen ist. Der Vorratsbehälter wird über nicht dargestellte Überwachventile in üblicher Weise aus der Hauptluftleitung mit Druckluft aufgeladen.

Abweichend zu vorstehender Beschreibung kann der Gehäusekanal 5 auch unmittelbar mit der Hauptluftleitung in Verbindung stehen.

Zum Öffnen des Auslaßteiles des Ein- und Auslaßventiles 7 befindet sich an dem Steuerkolben 1 ein Ansatz 8, der an seiner freien Stirnseite als Ventilsitz ausgebildet ist. Das Ein- und Auslaßventil 7 besitzt in seinem Auslaß 7″ eine zur Atmosphäre offene, zentrale Bohrung, die in eine Düse ausläuft. In der dargestellten Stellung des Ein- und Auslaßventils 7 mit dem geöffneten Einlaß 7′ ist der gedüste Auslaß 7″ von dem Ansatz 8 des Steuerkolbens 1 abgesperrt.

Im Raum 2 befindet sich eine Feder 9, die den Steuerkolben 1 belastet. Am Steuerkolben 1 befindet sich ein Stößel 10, der durch eine den Raum 2 begrenzende Gehäusewand 11 druckdicht in einen Raum 12 hineinragt. Der Raum 12 ist an den Gehäusekanal 4 und damit an die Hauptluftleitung angeschlossen und ist über einen Gehäusekanal 13 in die Atmosphäre entlüftet. Im Raum 12 befindet sich ein diesen hinsichtlich seiner vorgenannten Anschlüsse unterteilendes Beschleunigungsventil 14, das in Schließrichtung von einer Feder 15 belastet ist und das in seiner geschlossenen Stellung den Gehäusekanal 4 und damit die Hauptluftleitung von dem Gehäusekanal 13 und damit dem Zugang zur Atmosphäre absperrt.

Insoweit entspricht der Schnellbremsbeschleuniger in seinem Aufbau und seiner Funktionsweise demjenigen nach der eingangs erwähnten EU-A 00 50 278, so daß sich weitere Ausführungen hierzu erübrigen.

In einem Gehäuseabschnitt 16 des Schnellbremsbeschleunigers nach Fig.1 ist ein Differentialkolben 17 gelagert, dessen größere Kolbenfläche 18 einen Raum 19 und dessen kleinere Kolbenfläche 20 einen weiteren Raum begrenzt, welcher durch einen gehäusefesten Ventilsitz 21 in einen zentralen Raum 22 und eine diesen umgebende Außenluftkammer 23 unterteilt ist. Der Ventilsitz 21 weist somit einen kleineren Durchmesser als die kleinere Kolbenfläche 20 des Differentialkolbens 17 auf ; in den Differentialkolben 17 ist ein mit dem Ventilsitz 21 zusammenwirkender und ein Auslaßventil 21,24 bildender Dichtring 24 eingelassen, der Differentialkolben 17 stellt somit einen Ventilkolben und zugleich das Schließglied für das Auslaßventil 21, 24 dar. Am Außenumfang der kleineren Kolbenfläche 20 trägt der Differentialkolben 17 einen vorspringenden Ringansatz 25, der unter Bildung eines engen Ringspaltes 26 eine Ringschulter 27 des Gehäuseabschnittes 16 umfaßt, wie besonders deutlich aus Fig.1A ersichtlich ist, radial außerhalb des Ringansatzes 25 befindet sich im Gehäuseabschnitt 16 eine Kammer 28, die durch einen Gehäusekanal 29 an die Atmosphäre angeschlossen ist. Der Differentialkolben 17 ist im Durchmesserbereich seiner größeren Kolbenfläche 18 und seiner kleineren Kolbenfläche 20 jeweils abgedichtet verschieblich in Gehäuseabschnitt 16 gelagert ; seine Differenzfläche 30 begrenzt einen ständig an die Atmosphäre angeschlossenen Raum 31. Im Raum 19 befindet sich eine den Differentialkolben 17 in Schließrichtung des Auslaßventils 21, 24 belastende Feder 32.

Vom Gehäusekanal 4 führt ein Zweigkanal 33 zum Raum 19, so daß letzterer ständig vom Hauptluftleitungsdruck beaufschlagt ist. Der zentrale Raum 22 ist über einen Gehäusekanal 34 an die Steuerkammer 3 angeschlossen und führt somit ständig den in dieser herrschenden Steuerdruck.

Die Feder 32 ist relativ schwach, sie dient im wesentlichen lediglich dazu, im drucklosen Zustand des Schnellbremsbeschleunigers das Auslaßventil 21, 24 geschlossen zu halten, damit während ersten Aufladevorgängen der Druckluftbremse mit Druckluft kein unnützer Druckluftauslaß offen ist, das Aufladen somit ungestört und ohne Druckluftverlust erfolgen kann.

Bei gelösten Bremsen herrscht zu beiden Seiten des Differentialkolbens 17, im Raum 19 und im zentralen Raum 22, die Regeldruckhöhe der Hauptluftleitung, welche zugleich in diesem Schaltzustand des Schnellbremsbeschleunigers den Steuerdruck in der Steuerkammer 3 bildet. Das Auslaßventil 21, 24 ist geschlossen. Bei einer einen bestimmten Druckgradienten übersteigenden Druckabsenkung in der Hauptluftleitung öffnet der Steuerkolben 1 das Beschleunigungsventil 14 und damit einen großquerschnittigen Auslaß von der Hauptluftleitung zur Atmosphäre ; zugleich wird der gedrosselte Auslaß 7″ von der Steuerkammer 3 zur Atmosphäre geöffnet, so daß in der Steuerkammer 3 eine nur langsame Druckabsenkung einsetzt. Durch die rasche Druckabsenkung in der Hauptluftleitung und damit dem Raum 19 und die nur sehr langsame Druckabsenkung in der Steuerkammer 3 und damit dem zentralen Raum 22 bildet sich zwischen den genannten, an den Differentialkolben 17 angrenzenden Räumen eine wachsende Druckdifferenz aus ; sobald diese Druckdifferenz einen bestimmten Wert überschreitet, wird der Differentialkolben 17 unter Öffnen des Auslaßventils 21, 24 gegen den Raum 19 hin verschoben. Die vorstehend erwähnte, hierbei am Differentialkolben 17 wirkende Druckdifferenz ist derart bemessen, daß in der Hauptluftleitung höchstens noch eine Druckhöhe herrscht, welche eine Vollbremsung bewirkt. Falls die Regeldruckhöhe in der Hauptluftleitung bei gelösten Bremsen wie üblich 5 bar beträgt und die Vollbremsung bei einer Druckabsenkung in der Hauptluftleitung auf 3,5 bar erreicht wird, kann es zweckmäßig sein, die zum Öffnen des Auslaßventils 21, 24 erforderliche, erwähnte Druckdifferenz zwischen dem Raum 19 und dem zentralen Raum 22 auf ca. 2,5 bar festzulegen. Die Druckdifferenz von 2,5 bar gibt hierbei ausreichend Sicherheit, daß beim Ansprechen des Schnellbremsbeschleunigers eine rasche Vollbremsung eintritt. Eine Festlegung der Druckdifferenz auf einen niedrigeren Wert, beispielsweise 2,0 bar, ergibt bei geringfügig verminderter Sicherheit für das rasche Erreichen einer Vollbremsung in allen Wagen eines Zuges eine größere Druckluftersparnis. Die Druckdifferenz wird durch entsprechende Bemessung der größeren Kolbenfläche 18 zur vom Ventilsitz 21 umschlossenen Fläche des Differentialkolbens 17 festgelegt.

Nach dem vorstehend erwähnten Öffnen des Auslaßventils 21, 24 strömt Druckluft aus der Steuerkammer 3 und dem zentralen Raum 22 in die Außenluftkammer 23 ein, wird, solange das Auslaßventil 21,24 nur wenig geöffnet ist, durch den Ringspalt 26 am Übertritt in die Kammer 28 gedrosselt und gestaut und strömt schließlich aus der Kammer 28 durch den Gehäusekanal 29 zur Atmosphäre ab. Der vom Ringspalt 26 in der Außenluftkammer 23 bewirkte Druckstau belastet den Differentialkolben 17 zusätzlich in Öffnungsrichtung des Auslaßventils 21, 24, so daß letzteres rasch und weit geöffnet wird, wobei der Ringansatz 25 axial aus dem Bereich der Ringschulter 27 gerät, und somit der Ringspalt 26 erweitert bzw. aufgehoben wird. Die Druckluft aus der Steuerkammer 3 vermag somit rasch zur Atmosphäre abzuströmen, so daß sich eine schnelle Steuerdruckabsenkung ergibt, der Druckabsenkungsgradient des Steuerdruckes ist größer als derjenige für den Hauptluftleitungsdruck. Sobald die augenblickliche Steuerdruckhöhe etwa die augenblickliche Höhe des Hauptluftleitungsdruckes erreicht, wird der Steuerkolben 1 unter Schließen des Beschleunigungsventils 14 und des Auslasses 7″ wieder angehoben, die weitere Entlüftung der Hauptluftleitung in die Atmosphäre damit abgesperrt. Zu diesem Zeitpunkt und bei diesen Druckverhältnissen vermag der restliche Hauptluftleitungsdruck auch den Differentialkolben 17 unter Schließen des Auslaßventils 21, 24 wieder anzuheben, so daß auch die Steuerkammer 3 von der Atmosphäre abgetrennt wird und ihre augenblickliche Druckhöhe beibehält. Damit ist unter Erhalten einer beachtlichen Restdruckhöhe in der Hauptluftleitung der Schnellbremsbeschleunigungsvorgang abgeschlossen, es kann sofort und damit sehr rasch nach dem Einleiten des Schnellbremsvorganges oder auch später durch Drucklufteinspeisen und damit Druckerhöhen in der Hauptluftleitung ein Bremslösevorgang eingeleitet werden. Spätestens während des Bremslösevorganges wird der Einlaß 7′ geöffnet, der Schnellbremsbeschleuniger gelangt damit wieder in seine Ausgangsstellung.

Wird nach Schließen des Auslaßventils 21, 24 bei in der Hauptluftleitung herrschender Restdruckhöhe von anderer Stelle aus die Schnellbrems-Entlüftung für die Hauptluftleitung fortgesetzt, so ergibt sich am Steuerkolben 1 eine erneute, das Beschleunigungsventil 14 erneut öffnende Druckdifferenz, die vorstehend geschilderten Vorgänge spielen sich bis zur völligen Entlüftung der Hauptluftleitung auf Atmosphärendruck erneut ab. Bei völliger Entlüftung der Hauptluftleitung und auch der Steuerkammer 3 hebt die Feder 32 den Differentialkolben 17 unter Schließen des Auslaßventils 21, 24 an, so daß, wie bereits erwähnt, ein nachfolgendes Wiederbeaufschlagen der Hauptluftleitung nicht durch unnötiges Entlüften der Steuerkammer 3 behindert wird.

Beim Ausführungsbeispiel des Schnellbremsbeschleunigers gemäß Fig. 2 wird als Ventilkolben anstelle des vorbeschriebenen Differentialkolbens ein einfacher Kolben 35 verwendet. Der Kolben 35 begrenzt einerseits die die Feder 32 beinhaltende, über den Zweigkanal 33 an den Gehäusekanal 4 und damit die Hauptluftleitung angeschlossene Kammer 19 und bildet mit seinem Dichtring 24 und dem gehäusefesten Ventilsitz 21 das Auslaßventil 21, 24 welches den zentralen Raum 22 von der in diesem Fall unmittelbar mit der Atmosphäre verbundenen Außenluftkammer 23′ abtrennt. Der zentrale Raum 22 steht wiederum durch den Gehäusekanal 34 mit der Steuerkammer 3 in Verbindung und ist somit vom Steuerdruck beaufschlagt. In Fig. 2 ist lediglich der geänderte Teil des Schnellbremsbeschleunigers dargestellt.

Tritt während Schnellbremsungen in den Beaufschlagungsdrücken zwischen dem Raum 19 und dem zentralen Raum 22 eine bestimmte Druckdifferenz auf, wie es vorstehend zu Fig. 1 bereits beschrieben wurde, so öffnet sich bei Erreichen der ebenfalls bereits beschriebenen, bestimmten Druckdifferenz das Auslaßventil 21, 24, woraufhin Druckluft aus der Steuerkammer 3 in die Außenluftkammer 23′ einströmt und eine ringförmige, die Außenluftkammer 23′ begrenzende Fläche des Kolbens 35 zusätzlich beaufschlagt. Das Auslaßventil 21, 24 wird hierdurch rasch und weit geöffnet und bleibt geöffnet, bis nach die Druckabsenkung in der Hauptluftleitung einholender Druckabsenkung in der Steuerkammer 3 und damit etwa bei Druckgleichheit zwischen beiden sowohl das Beschleunigungsventil 14 als auch das Auslaßventil 21, 24 wieder geschlossen werden. Der Schnellbremsvorgang ist damit wenigstens vorerst abgeschlossen und der Restdruck in der Hauptluftleitung bleibt erhalten, die augenblickliche Druckhöhe in der Hauptluftleitung liegt wiederum mit einem Sicherheitsabstand unterhalb der eine Vollbremsung bewirkenden Druckhöhe. Im übrigen entspricht die Funktion des Schnellbremsbeschleunigers nach Fig. 2 derjenigen nach Fig. 1 und braucht daher nicht nochmals beschrieben zu werden.

Die Verbindung der Außenluftkammer 23′ zur Atmosphäre kann in geeigneter Weise derart bemessen werden, daß sich in der Außenluftkammer 23′ ein das Auslaßventil 21, 24 durch Beaufschlagen des Kolbens 35 ausreichend lange, bis zum Druckausgleich zwischen Steuer- und Hauptluftleitungsdruck offenhaltender Staudruck ergibt ; es ist dabei jedoch darauf zu achten, daß bei geöffnetem Auslaßventil 21, 24 der Druckabfallgradient für den Steuerdruck in der Steuerkammer 3 größer als derjenige für den Hauptluftleitungsdruck ist.

Bezugszeichenliste

1 Steuerkolben

2 Raum
3 Steuerkammer
4 Gehäusekanal
5 Gehäusekanal
6 Drossel
7 Ein- und Auslaßventil
7' Einlaß
7" Auslaß
8 Ansatz
9 Feder
10 Stößel
11 Gehäusewand
12 Raum
13 Gehäusekanal
14 Beschleunigungsventil
15 Feder
16 Gehäuseabschnitt
17 Differentialkolben
18 größere Kolbenfläche
19 Raum
20 kleinere Kolbenfläche
21 Ventilsitz
22 zentraler Raum
23 Außenluftkammer
23' Außenluftkammer
21, 24 Auslaßventil
24 Dichtung
25 Ringansatz
26 Ringspalt
27 Ringschalter
28 Kammer
29 Gehäusekanal
30 Differenzfläche
31 Raum
32 Feder
33 Zweigkanal
34 Gehäusekanal
35 Kolben

## Patentansprüche

1. Schnellbremsbeschleuniger für indirekt wirkende Druckluftbremsen von Schienenfahrzeugen, mit einem Steuerkolben (1) zur Steuerung eines in eine Entlüftung der Hauptluftleitung eingeschalteten Beschleunigungsventils (14), wobei der Steuerkolben (1) einerseits, in Schließrichtung des Beschleunigungsventils (14) wirkend, ungedrosselt vom Druck in der Hauptluftleitung und andererseits von einem Steuerdruck in einer Steuerkammer (3) beaufschlagt ist, die an die Hauptluftleitung oder an einen von der Hauptluftleitung gespeisten Vorratsbehälter angeschlossen ist, und mit einem in eine Entlüftung der Steuerkammer (3) eingeschalteten Auslaßventil (21, 24), das in Schließrichtung von einem vom Hauptluftleitungsdruck beaufschlagten Ventilkolben (17, 35) gesteuert ist, dadurch gekennzeichnet, daß bei geöffnetem Beschleunigungs- und Auslaßventil (14 und 21, 24) durch entsprechendes, unter Berücksichtigen der jeweils zu entlüftenden Volumina erfolgendes Bemessen der Entlüftungsquerschnitte der Hauptluftleitungsdruck einen geringeren Druckabsenkungsgradienten als der Steuerdruck aufweist, daß der Ventilkolben (17, 35) zumindest bei geschlossenem Auslaßventil (21, 24) zwei unterschiedlich große Beaufschlagungsflächen (18, 20) aufweist, deren größere (18) vom Hauptluftleitungsdruck und deren kleinere (20) hierzu entgegenwirkend vom Steuerdruck·beaufschlagt ist, und daß eine nach Öffnen des Auslaßventils (21, 24) wirksame Offenhaltungsvorrichtung vorgesehen ist, welche eine dem Auslaßventil (21, 24) in Strömungsrichtung zur Atmosphäre nachgeschaltete Außenluftkammer (23, 23') aufweist, deren Druck den Ventilkolben (17, 35) zusätzlich in Öffnungsrichtung des Auslaßventils (21, 24) belastet, und welche das Auslaßventil (21, 24) zumindest annähernd bis zum Eintritt gleicher Druckhöhen in der Hauptluftleitung und der Steuerkammer (3) offenhält und erst nachfolgend ein Wiederschließen des Auslaßventils (21, 24) ermöglicht.

2. Schnellbremsbeschleuniger nach Anspruch 1, dadurch gekennzeichnet, daß eine das Auslaßventil (21, 24) in Schließrichtung belastende Feder (32) vorgesehen ist.

3. Schnellbremsbeschleuniger nach Anspruch 1 oder 2, dadurch gekennzeichnet, daß der Ventilkolben (17, 35) das Schließglied des zu ihm zentrischen, von der Außenluftkammer (23,23') umgebenen Auslaßventils (21, 24) bildet, dessen Durchmesser kleiner als der wirksame Durchmesser des Ventilkolbens (17, 35) ist.

4. Schnellbremsbeschleuniger nach Anspruch 3, dadurch gekennzeichnet, daß der Ventilkolben als Differentialkolben (17) ausgebildet ist, auf dessen kleinerer Kolbenseite (20) das einen kleineren Durchmesser als diese aufweisende Auslaßventil (21, 24) angeordnet ist, daß der Differentialkolben (17) zusammen mit dem Ventilgehäuse (16) einen zumindest bei geschlossenem oder nur unzureichend geöffnetem Auslaßventil (21, 24) wirksamen Ringspalt (26) bildet, dessen Durchmesser dem Durchmesser der kleineren Kolbenseite (20) wenigstens annähernd entspricht, der die Außenluftkammer (23) umgibt und der seinerseits von einer Atmosphärendruck führenden Kammer (28) umschlossen ist, und daß die Differenzfläche (30) des auf seiner größeren Kolbenfläche (18) vom Hauptluftleitungsdruck belasteten Differentialkolbens (17) vom Atmosphärendruck beaufschlagt ist.

## Claims

1. Emergency brake accelerator for indirectly acting compressed-air brakes on rail vehicles, comprising a control piston (1) to control an acceleration valve (14) inserted in a main air brake pipe vent, the control piston (1) being loaded on the one hand unrestrictedly by the pressure in the main air brake pipe in the closing direction of the acceleration valve (14) and on the other hand by a control pressure in a control chamber (3) which is connected to the main air brake pipe or to a reservoir fed by the main air brake pipe ; and comprising an outlet valve (21, 24) inserted in a vent of the control chamber (3), which outlet valve is controlled in the closing direction by a valve piston (17, 35) loaded by the main air brake pipe pressure, wherein, with the acceleration and outlet valves (14 and 21, 24) open, the main air brake pipe pressure is given a lower pressure reduction gradient than the control pressure by dimensioning the vent cross-sections accordingly to account for the various volumes that need venting, wherein the valve piston (17, 35) has, at least when the outlet valve (21, 24) is closed, two loading surfaces (18, 20) of different size, the larger (18) of which is exposed to the main air brake pipe pressure while the smaller one (20) is loaded in the opposite direction by the control pressure, and wherein a keeper device is provided which takes effect after the opening of the outlet valve (21, 24) and which has an external air chamber (23, 23') downstream of the outlet valve (21, 24) in the direction of flow to atmosphere, the pressure of the said external air chamber being applied to the valve piston (17, 35) additionally in the opening direction of the outlet valve (21, 24), and which keeper keeps the outlet valve (21, 24) open at least approximately until the equalization of the pressures in the main air brake pipe and control chamber (3) and which only then allows the outlet valve (21, 24) to close again.

2. Emergency brake accelerator as defined in Claim 1, wherein there is a spring (32) loading the outlet valve (21, 24) in the direction of closing.

3. Emergency brake accelerator as defined in Claim 1 or 2, wherein the valve piston (17, 35) forms the closing member of the outlet valve (21, 24) which is positioned centrally relative to it and which is encompassed by the external air chamber (23, 23'), the diameter of the said outlet valve being smaller than the effective diameter of the valve piston (17, 35).

4. Emergency brake accelerator as defined in Claim 3, wherein the valve piston is designed as a differential piston (17), at whose smaller piston end (20) there is the outlet valve (21, 24) which has a smaller diameter than the said end (20), wherein the differential piston (17) forms together with the valve body (16) an annular gap (26) which is effective at least when the outlet valve (21, 24) is closed or is only insufficiently open, the diameter of the said gap (26) corresponding at least approximately to the diameter of the smaller piston end (20), which gap (26) encompasses the external air chamber (23) and is in turn encompassed by a chamber (28) at atmospheric pressure, and wherein atmospheric pressure is applied to the differential surface (30) of the differential piston (17) which is loaded by main air brake pipe pressure at its larger piston end (18).

**Revendications**

1. Accélérateur de freinage rapide pour des freins à air comprimé à action indirecte pour des véhicules sur rails, comportant un piston de commande (1) pour la commande d'une valve accélératrice (14) montée dans une désaération de la conduite d'air principal, ladite valve de commande (1) étant chargée, d'une part, en agissant dans le sens de la fermeture de la valve accélératrice, sans étranglement, par la pression qui règne dans la conduite principale, et, d'autre part, par une pression de commande qui règne dans une chambre de commande (3) qui est reliée à la conduite principale ou à un réservoir de réserve alimenté par la conduite principale, ainsi qu'une valve d'évacuation (21, 24) qui est montée dans une évacuation de la chambre de commande (3) et qui est commandée dans le sens de la fermeture par un piston de soupape (17, 35) chargé par la pression qui règne dans la conduite principale, caractérisé par le fait que, les soupapes d'accélération et d'évacuation (14 et 21, 24) étant ouvertes et pour un dimensionnement correspondant des sections transversales de désaération établies en fonction des volumes à évacuer, la pression qui règne dans la conduite principale présente un plus faible gradient de chute de pression que la pression de commande, que la valve de commande (17, 35) comporte, au moins, dans le cas de fermeture de la valve d'évacuation (21, 24), deux surfaces de charge (18, 20) de dimensions différentes, dont la plus grande (18) est chargée par la pression qui règne dans la conduite principale et dont la plus petite (20) est chargée, en agissant à l'encontre de la précédente, par la pression de commande et qu'il est prévu un dispositif de maintien en position d'ouverture qui devient actif après l'ouverture de la valve d'évacuation (21, 24) et qui comporte une chambre (23, 23') en communication avec l'atmosphère, montée en aval de la valve d'évacuation, dans le sens de l'écoulement vers l'atmosphère, et dont la pression charge, en plus, le piston de commande (17, 35) dans le sens de l'ouverture de la valve d'évacuation (21, 24) et qui maintient dans la position d'ouverture la valve d'évacuation (21, 24) au moins approximativement jusqu'à établissement de niveaux de pression égaux dans la conduite principale et la chambre de commande (3) et n'autorise qu'ensuite la nouvelle fermeture de la valve d'évacuation (21, 24).

2. Accélérateur de freinage rapide selon la revendication 1, caractérisé par le fait qu'il est prévu un ressort (32) qui charge la valve d'évacuation (21, 24) dans le sens de la fermeture.

3. Accélérateur de freinage rapide selon la revendication 1 ou 2, caractérisé par le fait que le piston de soupape (17, 35) forme l'organe de fermeture de la valve d'évacuation (21, 24) qui est entouré concentriquement par la chambre à air atmosphérique (23, 23'), et dont le diamètre est inférieur au diamètre efficace du piston de soupape (17, 35).

4. Accélérateur de freinage rapide selon la revendication 3, caractérisé par le fait que le piston de soupape est réalisé sous la forme d'un piston différentiel (17) sur le côté du piston (20) le plus petit duquel est disposée une valve d'évacuation (21, 24) ayant un diamètre plus faible que ledit côté, que le piston différentiel (17) forme, avec le carter de la valve (16) une fente annulaire (26) mais qui agit au moins lorsque la valve d'évacuation (21, 24) est fermée ou n'est qu'insuffisamment ouverte, fente annulaire (26) dont le diamètre correspond au moins approximativement au diamètre du petit côté du piston (20), qui entoure la chambre à pression atmosphérique (23) et qui est entourée, à son tour, par une chambre (28) dont laquelle règne la pression atmosphérique, et que la surface différentielle (30) du piston différentiel (17) qui est chargée, sur sa surface de piston la plus grande (18), par la pression qui règne dans la conduite principale, est chargée par la pression atmosphérique.

# Fig. 1

# Fig. 1A

# Fig. 2